# EUROPEAN PATENT SPECIFICATION

(11) **EP 0 684 602 B1**
(45) Date of publication and mention of the grant of the patent: **17.06.1998**
(21) Application number: 95202184.8
(22) Date of filing: 13.03.1991
(51) Int. Cl.: G11B 15/00, G11B 27/028, G11B 19/00, G11B 27/10

(54) **Control system for reproduction devices**
Steuerungssystem für Wiedergabevorrichtungen
Système de commande pour dispositifs de reproduction

(30) Priority: 16.03.1990 JP 66314/90
(43) Date of publication of application: 29.11.1995
(62) Divisional of application: 91302115.0
(73) Proprietor: SONY CORPORATION, Tokyo (JP)
(72) Inventor: Suzuki, Shogo, c/o Intellectual Property Division, Tokyo 141 (JP); Morishima, Shinichi, c/o Intellectual Property Div, Tokyo 141 (JP)
(74) Representative: Turner, James Arthur

(56) References cited:
- EP-A- 0 191 473
- EP-A- 0 394 008
- GB-A- 2 060 203
- US-A- 4 210 939
- FERNSEH UND KINO TECHNIK, vol.42, no.10, October 1988, BERLIN DE pages 471 - 482 U.FROEHLICH 'VERKOPPLUNGS UND SYSNCHRONISATIONSTECHNIK'

## Description

The invention relates to controllers and control systems in general and to controllers and control systems for controlling reproduction devices such as video tape recorders (VTRs) in particular.

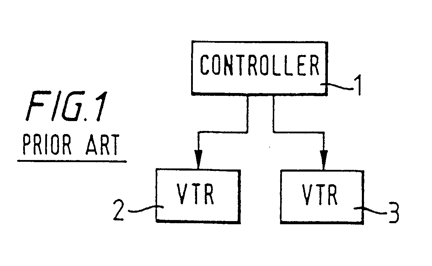

Fig. 1 is a schematic block diagram of a controller 1 for controlling two video tape recorders (VTRs) 2 and 3 concurrently. The VTRs 2 and 3 are each connected to the controller 1 so as to enable input and output of video signals and operational commands to permit operations such as editing and the like to be performed.

EP-A-0 394 008, published after the claimed priority date of the present application, discloses an editing control system for controlling multiple VTRs. Variable speed operation (in jog and shuttle modes) is described.

An object of the invention is to provide a convenient mechanism for selecting a variable speed for a controlled device such as a VTR.

This invention provides a controller for controlling a reproduction apparatus comprising:
reproduction-speed selecting means for selecting a value for the reproduction speed, characterised by
a variable-speed dial for varying the reproduction speed,
position detecting means for outputting rotational position information representing a rotational position of the variable-speed dial,
reproduction-speed switching means for setting the reproduction speed in accordance with a selecting operation to a value determined by operating one of the reproduction-speed selecting apparatus or a value based on the rotational position information output by the position detecting means, and
initializing means operable on selection of the variable-speed dial for initializing the rotational position information output by the position detecting means to a value corresponding to a reproduction speed prior to the selection of the variable-speed dial, and outputting the initialized rotational position information to the reproduction-speed switching means.

There are additional problems associated with conventional controllers and control systems. A conventional controller such as that illustrated in Fig. 1 is able to control the pair of VTRs 2 and 3 in synchronism with each other such that information can be reproduced therefrom in a normal reproduction mode. In other words, the controller can reproduce information from the VTRs 2 and 3 at speeds sychronized with each other in normal reproduction mode. With a VTR set in a predetermined control mode, control data is provided from the controller to the VTR to switch its operating mode and, at the same time the control data is output to the other VTR. In this way, the VTRs can be set in a normal reproduction mode. In this mode, the video tape recorders are operated with a predetermined reference signal taken as a reference so that they reproduce information in a synchronized manner.

With the conventional controller, the operations of a plurality of the VTRs can be synchronized to output synchronized reproduction signals in the normal reproduction mode.

A problem arises where it is desired to synchronize the reproduction of information from a plurality of video tape recorders at variable speeds, as for example would be desirable for a relay station, for example, for broadcasting a baseball game.

The technique used as the normal reproduction mode is not suitable for synchronizing the reproduction of information from a plurality of video tape recorders at variable speeds due to small discrepancies in reproduction speed and differences in rise-time and fall-time characteristics between the video tape recorders.

Preferred embodiments of the controller are operable to control a reproduction speed of a first reproduction apparatus and a reproduction speed of a second reproduction apparatus by outputting a reproduction-speed control signal to the first reproduction apparatus and a reproduction-speed control signal to the second reproduction apparatus, the controller permitting control mode switching based on the reproduction-speed control signals to be performed and, for reproduction speeds within a predetermined range, the reproduction-speed control signals to be adjusted so that time information fed back by the first reproduction apparatus matches with time information fed back by the second reproduction apparatus.

Preferred embodiments of the invention are described hereinafter with reference to the accompanying drawings in which:
Fig. 1 is a schematic diagram of a prior art controller for controlling two video tape recorders;
Fig. 2 is a schematic block diagram of elements one example of a controller for a control system;
Fig. 3 is a schematic block diagram of elements of a second example of a controller;
Fig. 4 is a flow chart showing the principle of operation of the controller of Fig. 3;
Fig. 5 is a schematic block diagram of elements of an example of a controller in accordance with the invention;
Fig. 6 is an illustration of part of a control panel of the controller of Fig. 5;
Fig. 7 is used in explaining the initialisation of a variable-speed dial of the controller of Fig. 5; and

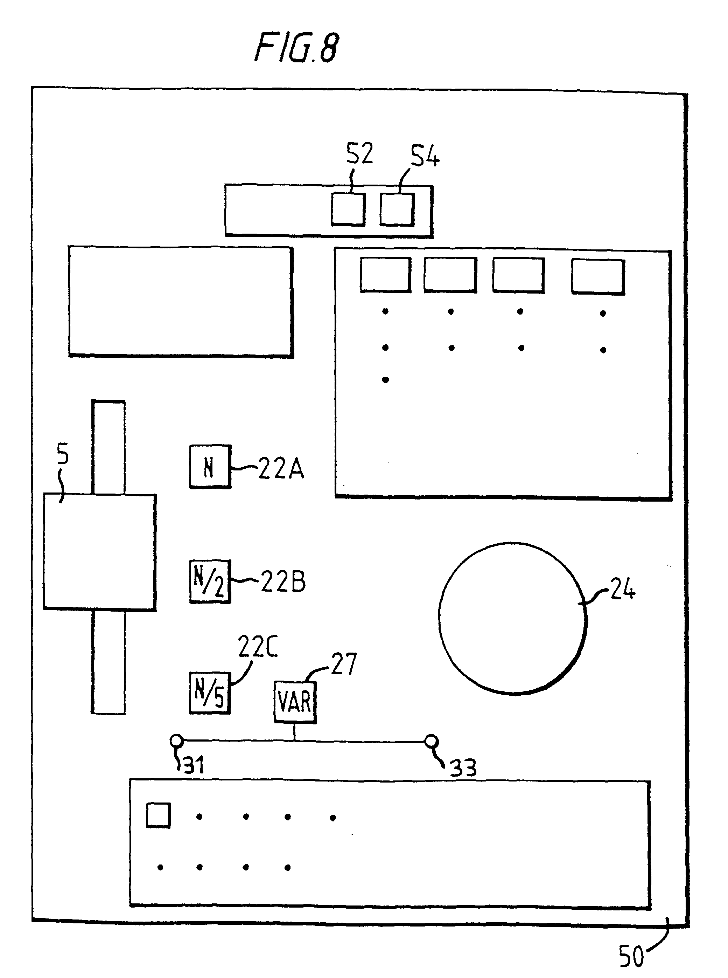

Fig. 8 is an illustration of elements of a control panel in accordance with the invention.

Aspects of a controller for allowing the reproduction of information from a plurality of controlled devices (e.g. VTRs) to be synchronized, even if the reproduction speed is changed, will now be described. The reproduction of information is synchronized by controlling the apparatus so that timing information output by each of the apparatus for a speed set in a predetermined range matches each other.

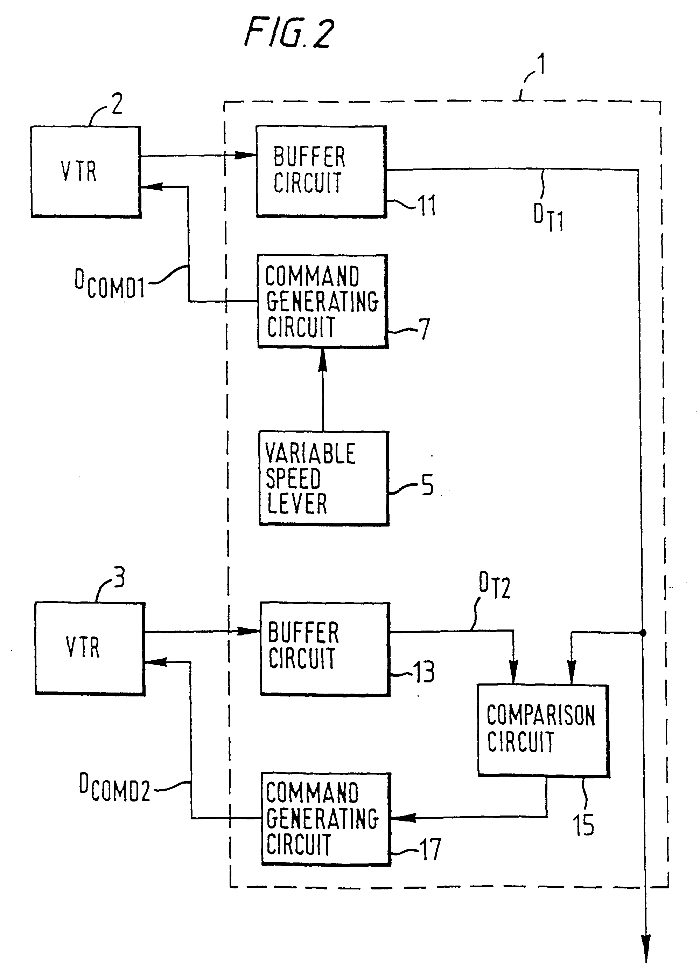

One example of a controller for providing synchronized reproduction to be performed on a plurality of VTRs at a variable speed is illustrated in Fig. 2. As shown in Fig. 2, a controller 1 controls the operations of video tape recorders (VTRs) 2 and 3.

The controller detects an amount of operation requested by a selector 5 (e.g. a variable-speed level 5) mounted on an operating panel of the controller. A command generating circuit 7 is responsive to a signal from the variable-speed lever 5 to output reproduction speed command data D_{COMD1} proportional to the amount of operation detected. As a result, the reproduction speed of the video tape recorder 2 is switched to a value in accordance to the amount of operation requested by the variable-speed lever 5.

Buffer circuits 11 and 13 convert fed-back signals SMPTEs output by the video tape recorders 2 and 3 into time information data D_{T1} and D_{T2} respectively which are fed to a comparison circuit 15. A result of the comparison between the time information data D_{T1} and D_{T2} is then provided to a command generating circuit 17.

The command generating circuit 17 generates reproduction speed control data D_{COMD2} based on the time codes D_{T1} and D_{T2}. The reproduction speed control data D_{COMD2} is output to the video tape recorder 3. Taking the time code D_{T1} as a reference, the video tape recorder 3 is thereby controlled. To be more specific, the reproduction speed of the video tape recorder 3 is controlled so that the time code D_{T2} matches the time code D_{T1}.

In this way, the reproduction speed of the video tape recorder 3 is adjusted to that of the video tape recorder 2 by comparing the time information D_{T2} to D_{T1}. Accordingly, reproduction of information from the video tape recorders 2 and 3 can be synchronized even if the reproduction speeds are varied.

In addition, the time code D_{T1} output by the buffer circuit 11 of the controller 1 is made available externally. Therefore, reproduction of information from another video tape recorder can also be synchronized as well by connecting an external controller to a signal line conveying the time information D_{T1}.

In this way, reproduction can be synchronized even if the reproduction speed is varied. For example, pictures of the same object are reproduced from the video tape recorders 2 and 3 in a slow motion. In this case, the reproduced picture can be switched between the video tape recorders 2 and 3 without generating inharmonious motions in the reproduced pictures.

Accordingly, such a controller can be used more easily and conveniently at a relay station, for example, for broadcasting a baseball game.

For example, the picture of a pitcher and that of a batter of a baseball game are to be displayed on the same screen in a slow motion. In this case, with the conventional apparatus, one operator operates a video tape recorder for reproducing the pitcher's picture while another operator operates another video tape recorder for reproducing the batter's picture in such a way that no inharmonious motion is seen on the screen.

With the reproducing apparatus provided, however, a single operator can synchronize reproduction of pictures at a variable speed with ease by merely operating the variable-speed lever 5 to give reproduced pictures free of inharmonious motions.

Since reproduction of pictures can be synchronized, reproduced pictures can be switched between the video tape recorders 2 and 3 without the necessity for the operators to monitor both the pictures to be switched at the same time as is the case with the conventional apparatus. By monitoring only one of the two reproduced pictures, they can be switched. Accordingly excess monitoring apparatus can be eliminated, resulting in fewer monitoring systems and a simplified overall configuration.

Particularly, in the case of a relaying car with limited space for accommodating relaying equipment, the reduced number of operators and the reduced number of monitoring apparatus required at the relaying site described above allow the small space available in the relaying car to be utilized efficiently and the work to be done in a more efficient manner.

In the configuration described above, receiving the reproduction speed control data D_{COMD1} output by the command generating circuit 7, the video tape recorder 2 runs at a reproduction speed determined by a shift amount requested by the variable-speed lever 5. Its time information D_{T1} is fed back to the comparison circuit 15 through the buffer circuit 11.

The video tape recorder 3 feeds back the time information D_{T2} to the comparison circuit 15 through the buffer circuit 13. At the same time, the video tape recorder 3 is operating under the control of the reproduction speed control data D_{COMD2} output by the command generating circuit 17, the operation of which is, in turn, based on the comparison result produced by the comparison circuit 15. The reproduction speed of the video tape recorder 3 is adjusted so that the time code D_{T2} matches the time code D_{T1} and, thus, the reproduction of information from the video tape recorder 3 is synchronized with that from the video tape recorder 2.

In the above configuration, based on the comparison result between the time codes D_{T1} and D_{T2} of the video tape recorders 2 and 3, the reproduction speed control data D_{COMD2} is generated for controlling the reproduction speed of the video tape recorder 3. As a result, with only a simple apparatus configuration, reproduction of pictures can be synchronized even at a variable reproduction speed.

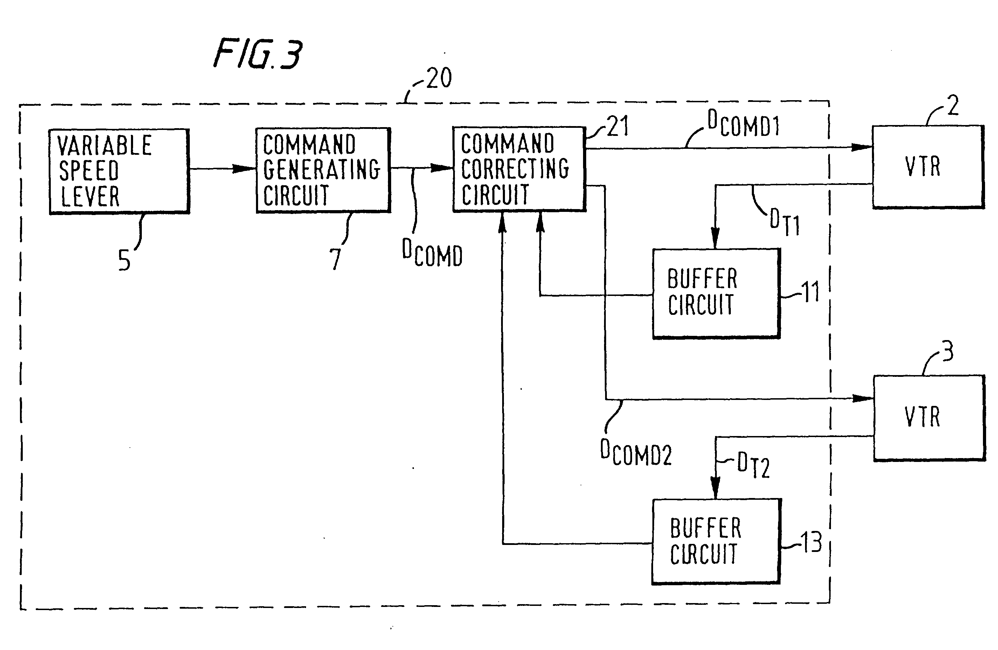

Fig. 3 shows an alternative to the arrangement shown in Fig. 2 using the same reference numerals used in that Figure. Reference numeral 20 shown in Fig. 3 is a controller for switching the control mode in accordance with the reproduction speed and correcting reproduction-speed control data D_{COMD} by use of a command correcting circuit 22 for each control mode.

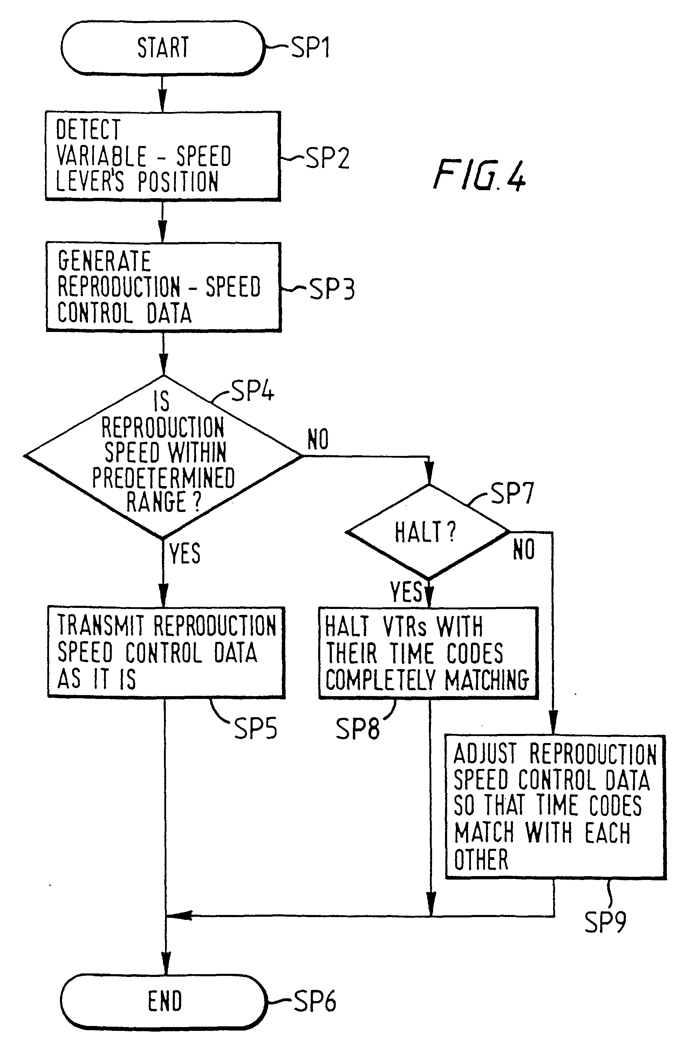

To be more specific, the controller 20 executes a processing procedure shown in Fig. 4 once a predetermined period of time. As shown in Fig. 4, the processing procedures begins with an operation SP1 which is followed by an operation SP2 in which the position of a variable-speed lever 5 is detected. The reproduction-speed control data D_{COMD} is produced by a command generating circuit 7 in a subsequent operation SP3.

Entering the next operation SP4, the controller 20 determines whether or not the reproduction speed determined by reproduction-speed corrected data D_{COMD} of a command correcting circuit 21 is within a predetermined range.

If a video tape recorder 2 or 3 reproduces picture information in the normal direction or if rewound at a speed exceeding a predetermined value, an acknowledge signal is received in the operation SP4 and the controller proceeds to an operation SP5.

In the operation SP5, the controller 20 outputs the reproduction-speed control data D_{COMD} to the video tape recorders 2 and 3 without modifying it by the command correcting circuit 21. Subsequently, the controller 20 moves forward to an operation SP6, completing the processing procedure.

A video tape recorder exists which has an inferior characteristic in that the reproduction speed does not quickly follow the reproduction-speed control data D_{COMD}. In this case, a corresponding change in the reproduction speed lags behind a variation in the reproduction-speed control data D_{COMD}.

Accordingly, in the case of such video tape recorders, even if the reproduction-speed control data D_{COMD} is output so that the time codes match each other as in the case with the first embodiment, a change in the reproduction speed lags behind a command given by the user's operation on the variable-speed lever 5. As a result, an inharmonious movement is seen in the reproduction picture when the user manipulates the variable-speed lever 5.

With regard to the inharmonious feeling resulted in by the operation of the variable-speed lever 5, however, the control scheme is such that, by raising the reproduction speed and varying the reproduction speed frequently, a discrepancy of the order of a few frames between the video tape recorders 2 and 3 is fortunately not observed visually.

Accordingly, in this example, the reproduction-speed control data D_{COMD} is not corrected in one way or another by the command correcting circuit 21 for high reproduction speeds. In this case, the reproduction speeds of the video tape recorders 2 and 3 are controlled by outputting the reproduction-speed control data D_{COMD} to the video tape recorders 2 and 3, not giving reproduction-speed responses to the operation of the variable-speed lever 5 the highest priority.

However, if the reproduction speed is determined by the operation SP4 to be within the predetermined range, the controller 20 proceed to an operation SP7. The operation SP7 checks whether the reproduction-speed control data D_{COMD} output by the command correcting circuit 21 of the controller 20 is control data to halt the magnetic tapes of the video tape recorders 2 and 3. If an acknowledge response confirming that the reproduction-speed control data D_{COMD} is control data halting the magnetic tapes, the processing procedure proceeds to an operation SP8. Based on time codes D_{T1} and D_{T2}, the operation SP8 adjusts the reproduction-speed control data D_{COMD}.

To be more specific, using the command correcting circuit 21, the controller 20 corrects the reproduction-speed control data D_{COMD} so that the time code D_{T1} fed back by the video tape recorder 2 matches the time code D_{T2} fed back by the video tape recorder 3. The command correcting circuit 21 then outputs reproduction-speed control data D_{COMD1} and D_{COMD2} to the video tape recorders 2 and 3 respectively. Receiving the reproduction-speed control data D_{COMD1} and D_{COMD2}, the video tape recorders 2 and 3 halt the magnetic tapes at positions where the time codes D_{T1} and D_{T2} match each other completely. Subsequently, the controller 20 returns to the operation SP6, finishing the processing procedure.

If slow-motion reproduction is resumed after halting the video tape recorders 2 and 3 without performing the control executed by the operation SP8, the video tape recorders 2 and 3 will carry out the slow-motion reproduction, with one of them starting with a frame different from the other, resulting in extremely inharmonious visual feeling in the observed pictures.

On the other hand, if slow-motion reproduction is resumed after halting the magnetic tapes of the video tape recorders 2 and 3 at positions where the time code D_{T1} matches the time code D_{T2}, the video tape recorders 2 and 3 will be able to carry out the slow-motion reproduction, resulting in no inharmonious visual feeling in the observed pictures even after once halting the magnetic tapes.

If a response which denies control data for halting the magnetic tapes of the video tape recorders 2 and 3 is received in the operation SP7, the controller 20 executes an operation SP9.

In the operation SP9, the controller 20 synchronizes the reproduction of picture from the video tape recorders 2 and 3 by correcting the reproduction-speed control data D_{COMD} using the command correcting circuit 21. The command correcting circuit 22 outputs the reproduction-speed control data D_{COMD1} and D_{COMD2} to the video tape recorders 2 and 3 respectively so that the time code D_{T1} fed back by the video tape recorder 2 matches the time code D_{T2} fed back by the video tape recorder 3.

In this way, for low reproduction speeds, since the frame of the video tape recorder 2 is controlled to match the frame of the video tape recorder 3, pictures can be reproduced with no inharmonious motions even if the video tape recorders 2 and 3 have inferior speed-response characteristics in that their speeds, to some extent, lag behind commands given by the variable-speed lever 5.

Accordingly, by synchronizing the picture reproduction, pictures can be reproduced with no observed inharmonious motions.

The synchronized reproduction to reproduce pictures which are as a whole free of inharmonious motions is carried out by the operation SP9 only if the reproduction speed is determined by the operation SP4 to be within the predetermined range.

In this configuration, for high reproduction speeds, the video tape recorders 2 and 3 receive the reproduction-speed control data D_{COMD} from the command generating circuit 7 with no correction whatsoever, operating at a reproduction 'speed corresponding to a command given by the variable-speed lever 5.

For low reproduction speeds within the predetermined range, however, the controller 20 synchronizes the reproduction of pictures from the video tape recorders 2 and 3 by correcting the reproduction-speed control data D_{COMD} using the command correcting circuit 22 which outputs the corrected reproduction-speed control data D_{COMD1} and D_{COMD2} to the video tape recorders 2 and 3 respectively so that the time code D_{T1} fed back by the video tape recorder 2 matches the time code D_{T2} fed back by the video tape recorder 3.

It is thus possible to synchronize the reproduction of pictures from the video tape recorders 2 and 3 at a reproduction speed varying with a command given by the variable-speed lever 5 by performing control so that the time code D_{T1} fed back by the video tape recorder 2 matches the time code D_{T2} fed back by the video tape recorder 3.

In addition, using the command correcting circuit 21, the controller 20 can also correct the reproduction-speed control data D_{COMD}, outputting the corrected reproduction-speed control data D_{COMD1} and D_{COMD2} to the video tape recorders 2 and 3 respectively so as t halt the magnetic tapes at positions where the time code D_{T1} fed back by the video tape recorder 2 completely matches the time code D_{T2} fed back by the video tape recorder 3 and then resumes the reproduction of pictures from the video tape recorders 2 and 3.

With the configuration shown in Fig. 3, only for low reproduction speeds within a predetermine range, does the controller 20 synchronize the reproduction of pictures from the video tape recorders 2 and 3 by correcting the reproduction-speed control data D_{COMD} using the command correcting circuit 22 in order to make the time code D_{T1} fed back by the video recorder 2 match the time code D_{T2} fed back by the video tape recorder 3, so that the synchronously reproduced pictures as a whole contain no inharmonious motions.

Thus the controller 20 in Fig. 3 controls reproduction speeds of first and second controlled devices (i.e. VTRs 2 and 3) by outputting reproduction-speed control signals (D_{COMD}) D_{COMD1} and D_{COMD2} to the controlled devices 2 and 3. Based on the reproduction-speed control signals (D_{COMD}) D_{COMD1} and D_{COMD2}, the controller 20 first switches the control mode of the controlled devices 2 and 3 so as to set their reproduction speeds within a predetermined range. The controller 20 then adjusts the reproduction control signals (D_{COMD}) D_{COMD1} and D_{COMD2} so that time information D_{T1} fed back by the controlled device 2 matches time information D_{T2} fed back by the controlled device 3.

By correcting the reproduction speed control signals (D_{COMD}) D_{COMD1} and D_{COMD2} and outputting the reproduction speed control signals (D_{COMD}) D_{COMD1} and D_{COMD2} to the first and second controlled devices 2 and 3 respectively so that the time information D_{T1} fed back by the first controlled device 2 matches the time information D_{T2} fed back by the second controlled device 3, the reproduction of information can be synchronized even if the reproduction speed is varied.

The examples described with reference to Figs. 2 to 4 utilize the SMPTE time code. It should be noted, however, that a variety of time codes are applicable. Furthermore, a variety of time information can also be used as a reference in addition to the time code.

The embodiments described above adopt a variable-speed lever as a means for adjusting the reproduction speed. In addition, the invention is also applicable to a configuration employing a variable-speed dial as a means for adjusting the reproduction speed as will be explained hereinbelow.

Also, in the embodiments described above, a video tape recorder is used as the controlled device. Note, however, that the controlled device need not be a VTR for the reproduction of pictures, but could also be a controlled device for example for variable-speed reproduction of information from a variety of video equipment.

Examples of controllers have been described which allow reproduction of information from controlled devices to be synchronized at a reproduction speed varying within a predetermined range; the devices being controlled by adjusting reproduction-speed control signals so that time information fed back by the device matches each other.

Aspects of a controller for a playback device such as a VTR which is operable at a variable speed will now be described.

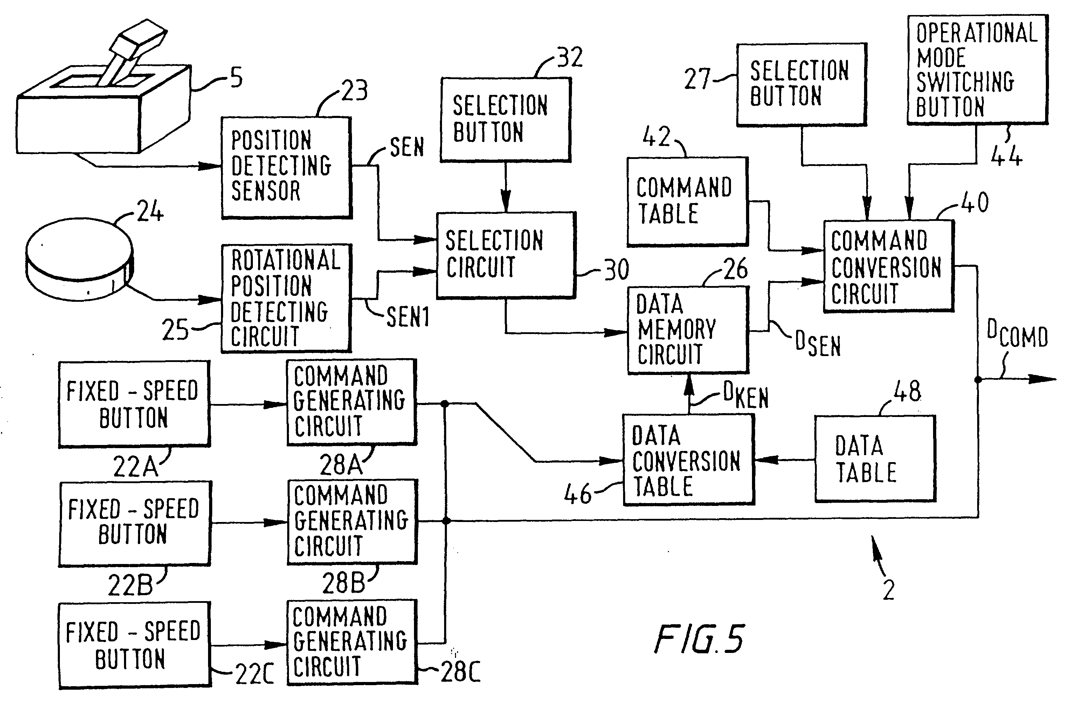

Fig. 5 illustrates an overview of elements of a controller 29 in accordance with the invention for controlling a VTR, the controller including a variable-speed lever 5 for varying the reproduction speed with a first position detecting means 23 for detecting the position of the variable-speed lever 5 and a variable speed dial 24 for varying the reproduction speed with a second position detecting means 25 for detecting the rotational position of the variable-speed dial 24. Reproduction-speed switching means 26, 30, 32, 40 and 42 are provided for switching the reproduction speed in accordance with detection results SEN or SEN1 output by the first and second positional detecting means 23 and 25 respectively.

The controller also includes reproduction-speed selecting operation buttons 22A, 22B and 22C for selecting a value for the reproduction speed, the variable-speed dial 24 for varying the reproduction speed, the second position detecting means 25 for outputting the rotational position information SEN1 in accordance with the rotational position of the speed-variable dial 24, reproduction-speed switching means 27, 28A, 28B, 28C, 40 and 42 for setting the reproduction speed to a value based on the selection of the reproduction-speed selecting operation buttons 22A, 22B and 22C or rotational position information D_{SEN} and initializing means 26, 46 and 48 for initializing the rotational position information SEN1 output by the position detecting means 25 in accordance with the reproduction speed set so far and outputting the initial value to the reproduction-speed switching means 27, 28A, 28B, 28C, 40 and 42 when the variable-speed dial 24 is selected.

The variable-speed lever 5 and the variable-speed dial 24 are provided so as to allow the reproduction speed to be switched in accordance with information SEN or SEN1 which represents the position of the variable-speed lever 5 or the variable-speed dial 24 respectively. Accordingly, the operator can adjust the reproduction speed by using the variable-speed lever 5 or the variable-speed dial 24 as necessary. The fact that either the variable-speed lever 5 or the variable-speed dial 24 can be selected for adjusting the reproduction speed makes the reproducing apparatus easier to use.

Furthermore, when the variable-speed dial 24 is selected, the second part of the invention allows the rotational position information SEN1 output by the second position detecting means 25 to be initialized in accordance with the reproduction speed set so far and the initial value to be output to the reproduction-speed switching means 27, 28A, 28B, 28C, 40 and 42. By doing this, an unnatural change in the reproduction speed that occurs right after the reproduction speed is selected can be eliminated effectively.

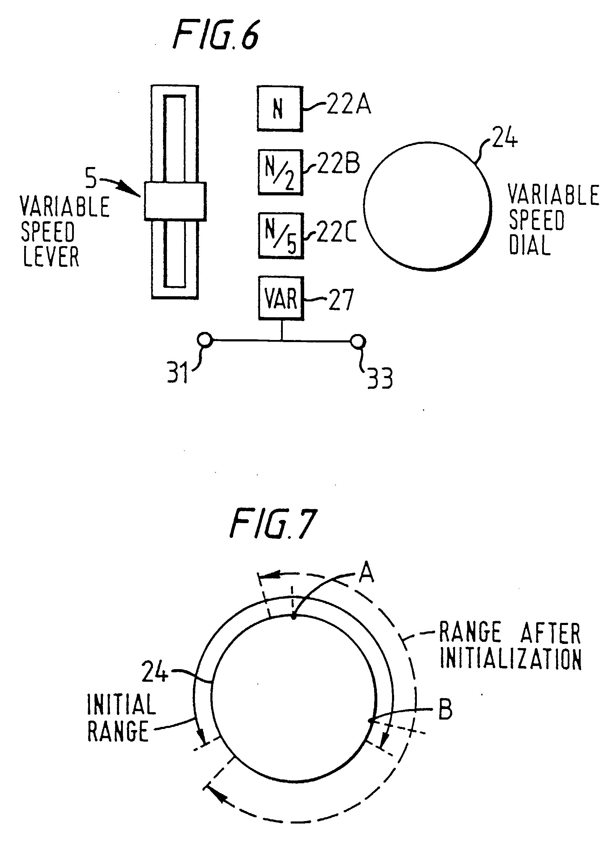

As shown in Fig. 6, fixed-speed buttons 22A, 22B and 22C are laid out on an operational panel of the controller 29, being sandwiched by a variable-speed lever 5 and the variable-speed dial 24. Light emitting diodes which serve as display lamps 31 and 33 are fixed below the variable-speed lever 5 and the variable-speed dial 24.

A selection circuit 30 shown in Fig. 5 works in response to the operation of a selection button 32. A position sensor 23 and the rotational position sensor 25 detect the position of the variable-speed lever 5 and the rotational position of the variable-speed dial 24 respectively, outputting detection results SEN and SEN1 either of which is selected by the selection circuit 30 as an input to a data memory circuit 26.

When a selection button 27 is turned on, the selection circuit 30 switches on either the variable-speed lever 5 or the variable-speed dial 24, allowing the operator to adjust the reproduction speed by operating either the variable-speed lever 5 or the variable-speed dial 24.

The selection circuit 30 turns on either the display lamp 31 or 33 depending upon whether the variable-speed lever 5 or the variable-speed dial 24 has been selected. In this way, the operator can visually identify which of the variable-speed lever 5 and the variable-speed dial 24 has been selected with the selection button 27 turned on.

When necessary, the operator can select either the variable-speed lever 5 or the variable-speed dial 24 for use in the adjustment of the reproduction speed by operating the selection button 27. Accordingly, the controller 20 of the video tape recorder becomes easier to use.

When the selection button 27 is turned on, a command conversion circuit 40 accesses a command table 42, outputting control data D_{COMD} the magnitude of which is determined by the position of the variable-speed lever 6 or the rotational position of the variable-speed dial 24. The position of the variable-speed lever 5 or the rotational position of the variable-speed dial 24 is indicated by the position data SEN or by the rotational position data SEN1 respectively which is once stored in the data memory circuit 26. The control data D_{COMD} sets the reproduction speed of the video tape recorder to a value determined by the position of the variable-speed lever 5 or the rotational position of the variable-speed dial 24.

When an operational mode switching button 44 is turned on, the command conversion circuit 40 accesses a different area of the command table 42, outputting the command data D_{COMD} having a special value which causes the video tape recorder to rewind or run at a fast speed depending upon the rotational position of the variable-speed dial 24.

By operating the variable-speed lever 5 or the variable-speed dial 24, it is thus possible for the operator not only to adjust the reproduction speed but also to search for head of the tape, for example.

The operator who is used to a variable-speed lever 5 can thus operate the additional variable-speed dial 24 with ease if necessary for searching for a program, for example. In this way, the controller 29 of the video tape recorder is made easy to operate by the addition of the variable-speed dial 24.

On the other hand, the operator who is not used to the operation of the variable-speed lever 5 can operate the controller 29 like a video tape recorder equipped with the conventional variable-speed dial in order to reproduce information free of inharmonious components.

In addition, the variable-speed lever 5 can be used as necessary for simplifying editing work, etc.

Receiving the control data D_{COMD} output by a command generating circuit 28A, 28B or 28C, a data conversion circuit 46 accesses a data table 48, converting the control data D_{COMD} into rotational position data D_{KEN} of the rotational position detecting sensor 22. The conversion performed by the data conversion circuit 46 is a reversed operation of the command conversion circuit 40.

The data conversion circuit 46 then outputs the rotational position data D_{KEN} to the data memory circuit 26, initializing the variable-speed dial 24.

In this way, when the selection button 27 is turned on, the data conversion circuit 46 updates the rotation position data SEN1 with the rotation position data D_{KEN} which is transmitted to the command conversion circuit 40 from the memory circuit 12.

Accordingly, the control data D_{COMD} output by the command conversion circuit 40 is a continuation of a value which was determined by the selected fixed-speed selecting button 22A, 22B or 22C immediately before the selection button 27 is turned on.

In this way, even if the operation is switched from the fixed-speed selecting button 22A, 22B or 22C to the variable-speed dial 24, the reproduction speed immediately before the operation switching can be retained allowing the operation to be switched without generating abrupt changes in the reproduction speed. It is thus possible to effectively eliminate unnatural variations from the reproduction speed at such switching of operation.

With a conventional video tape recorder, as the operation is switched from the fixed-speed button 22A, 22B or 22C to the variable-speed lever 5, the reproduction speed changes abruptly and, thus, unnaturally from a value determined by the selected fixed-speed button 22A, 22B or 22C to a value set by the variable-speed lever 5. The unnatural and abrupt change in the reproduction speed cannot be avoided.

In the case of the embodiment, however, the variable-speed dial 24 is initialized with a value right after the operation is switched from the fixed-speed button 22A, 22B or 22C to the variable-speed dial 24. As described previously, the initial value is equal to the reproduction speed prior to the switching of operation from the fixed-speed button 22A, 22B or 22C to the variable-speed dial 24. Accordingly, such an unnatural and abrupt change in the reproduction speed can be eliminated effectively.

As the rotational position data SEN1 output by the rotational-position detecting sensor 25 is sequentially varied, the data conversion circuit 46 further adjusts the rotational position data D_{SEN} output by the data memory circuit 26 within a predetermined range having the rotational position data D_{KEN} as a centre in accordance with the variation of the rotational position data SEN1.

In addition, if the rotational position data D_{SCN} is about to change, exceeding the predetermined range, the data conversion circuit 46 sends a control signal to the variable-speed dial 24 in order to prevent the variable-speed dial 24 from further rotating.

For example, assume that the variable-speed dial 24 can be initially rotated by 120 degrees in both the clockwise and counterclockwise directions from a centre point A as shown in Fig. 7. The operation is then switched to the fixed-speed selecting button 22A, 22B or 22C. When the operation is switched back to the variable-speed dial 24, the centre of rotation may be shifted from the point A to a new point B so that the variable-speed dial can now be rotated by 120 degrees in both the clockwise and counterclockwise directions from the new centre point B.

It should be noted that the variable-speed 24 can be rotated within a range which is predetermined by taking the initial value of the rotational data D_{SEN} as a reference. The same adjustment range as that prior to the reselection of the variable-speed dial 24 can thus be retained.

Accordingly, because of the fact that an unnatural and abrupt change in the reproduction speed can be prevented from occurring right after the selection of the variable-speed dial 24 by initializing the rotational data D_{SEN}, the operator can adjust the reproduction speed by rotating the variable-speed dial 24 without causing inharmonious feeling as if the variable-speed dial 24 had been selected by once presetting the variable-speed dial 24 to a position corresponding to a reproduction speed requested by the fixed-speed selecting button 22A, 22B or 22C.

Here, a position detecting sensor 23 works as a first position detecting means for detecting the position of the variable-speed lever 5 whereas the rotational-position detecting sensor 25 functions as a second position detecting means for detecting the rotational position of the variable-speed dial 24.

In addition, the data memory circuit 26, the selection circuit 30, the selection button 32, the command conversion circuit 40 and the command table 42 constitute a reproduction-speed switching means for switching the reproduction speed in accordance with the detection result SEN or SEN1 output by the first or second position detecting means respectively.

On the other hand the fixed-speed buttons 22A, 22B and 22C form a reproduction speed selecting means for selecting a reproduction-speed while the rotational position detecting sensor 22 serves as a rotational position detecting means for outputting the rotational position information SEN1 which represents the rotational position of the variable-speed dial 24.

Furthermore, the selection button 27, the command generating circuits 28A, 28B and 28C, the command conversion circuit 40 and the command table 42 together constitute a reproduction-speed switching means for switching the reproduction speed in response to the operation of the selection button 27 to a value determined by the selection of the fixed-speed buttons 22A, 22B and 22C or to a value based on the rotational position information D_{SEN}. The data memory circuits 26 the data conversion circuit 46 and the data table 48 together form an initializing means for initializing the rotational position information SEN1 output by the second position detecting means to a value equal to the reproduction speed being set so far and feeding the initial value to the reproduction-speed switching means whenever the variable-speed dial 24 is selected for adjusting the reproduction speed.

In the configuration described above, when the fixed-speed button 22A, 22B or 22C is turned on, the control data D_{COMD} is output by the command generating circuits 28A, 28B or 28C associated with the fixed-speed button 22A, 22B or 22C respectively. In this case, information is reproduced from a magnetic tape moving at a reproduction speed determined by the fixed-speed button 22A, 22B or 22C.

Incidentally, when the selection buttons 27 and 32 are operated to select the variable-speed lever 5, the position data SEN representing the position of the variable-speed lever 5 is output by the position detecting sensor 23 through the selection circuit 30.

Based on the position data SEN, a command table 42 is accessed for eventually causing the command conversion circuit 40 to output the control data D_{COM} having a value corresponding to a reproduction speed requested by the variable-speed lever 5. As a result, information can be reproduced at a desired reproduction speed by operating the variable-speed lever 5.

On the other hand, when the selection buttons 27 and 32 are operated to select the variable-speed dial 24, the position data SEN1 having a value corresponding to a reproduction speed requested by the variable-speed dial 24 is output by the rotational-position detecting sensor 25 through the selection circuit 30.

The position data SEN1 eventually causes the command conversion circuit 40 to output the control data D_{COMD} having a value corresponding to a reproduction speed requested by the variable-speed dial 24. As a result, information can be reproduced at a desired reproduction speed by operating the variable-speed dial 24.

In this way, either the variable-speed lever 5 or the variable-speed dial 24 can be selected as necessary for adjusting the reproduction speed, allowing the video tape recorder to be used more easily.

When the operation is switched from the fixed-speed button 22A, 22B or 22C to the variable-speed dial 24, the rotational position data D_{KEN} having a value corresponding to the reproduction speed being set so far is output by the data conversion circuit 46. The rotational position data D_{KEN} is used to update the rotational position data D_{SEN} output by the data memory circuit 27.

In this way, the variable-speed dial 24 is initialized, causing the video tape recorder to retain the reproduction speed being set so far in case the operation is switched to the variable-speed dial 24.

When the operation is switched to the variable-speed dial 24, the reproduction speed of the video tape recorder is adjusted by manipulating the variable-speed dial 24 with the reproduction speed prior to the switching of the operation taken as a start point. Accordingly, an abrupt and unnatural change in the reproduction speed that would otherwise occur upon the selection of the variable-speed dial 24 can be virtually eliminated.

The configuration described above allows either the variable-speed lever 5 or the variable-speed dial 24 to be selected for use in adjusting the reproduction speed. It is thus possible to make the video tape recorder easier to use by virtue of the feature that allows either the variable-speed lever 5 or the variable-speed dial 24 to be selected.

In addition, the variable-speed dial 24 is initialized right after being selected to a value corresponding to the reproduction speed prior to the selection of the variable-speed dial 24, allowing an abrupt and unnatural change in the reproduction speed that would otherwise occur upon the selection of the variable-speed dial 24 to be effectively eliminated.

An embodiment that initializes the variable-speed dial 24 upon the switching of operation from the fixed-speed button 22A, 22B or 22C to the variable-speed dial 24 has been described with reference to Fig. 5. It should be noted, however, that another embodiment could initialize the variable-speed dial 24 upon switching of operation from the variable-speed lever 5 to the variable-speed dial 24.

Also in the embodiment described with reference to Fig. 5 above, the variable-speed dial 24 is initialized by updating the rotational position SEN1 once stored in the data memory circuit 12 with the rotational position data D_{KEN} output by the data conversion circuit 46. A variety of alternative initialisation techniques can also be applied as well as the initializing means described herein.

In the case of the embodiment described with reference to Fig. 5 above, the invention is applied to a video tape recorder. It should be noted, however, that the invention is applicable not only to video tape recorders but also to a wide range of reproduction devices operating at variable speeds, such as a video disc player.

Fig. 6 is a schematic diagram of a control panel 50 of an example of a controller in accordance with the invention. The control panel 50 comprises many controls not relevant to the present invention, and accordingly are not described herein. In addition, the control panel comprises a selection button 27 for selecting either a variable-speed lever 6 or a variable speed dial 24. The controller comprises a plurality of buttons 22A, 22B and 22C for selecting variable speeds. In addition, the controller comprises a button 52 for requesting that the controller operates in master mode and a button 54 for deselecting master mode.

## Claims

1. A controller for controlling a reproduction apparatus comprising:
reproduction-speed selecting means (22A, 22B, 22C) for selecting a value for a reproduction speed characterised by
a variable-speed dial (24) for varying the reproduction speed;
position detecting means (25) for outputting rotational position information representing a rotational position of the variable-speed dial (24);
reproduction-speed switching means (40) for setting the reproduction speed in accordance with a selecting operation to a value determined by operating the reproduction-speed selecting means (22A, 22B, 22C) or a value based on the rotational position information output by the position detecting means (25), and
initializing means (26, 46, 48) operable on selection of the variable-speed dial for initializing the rotational position information output by the position detecting means (25) to a value corresponding to a reproduction speed prior to the selection of the variable-speed dial (24), and outputting the initialized rotational position information to the reproduction-speed switching means (40).

2. A controller as claimed in Claim 1, the controller being operable to control a reproduction speed of a first reproduction apparatus (2) and a reproduction speed of a second reproduction apparatus (3) by outputting a reproduction-speed control signal (D_{COMD1}) to the first reproduction apparatus (2) and a reproduction-speed control signal (D_{COMD2}) to the second reproduction apparatus (3), the controller permitting control mode switching based on the reproduction-speed control signals (D_{COMB1}, D_{COMB2}) to be performed and, for reproduction speeds within a predetermined range, the reproduction-speed control signals to be adjusted so that time information fed back by the first reproduction apparatus (D_{T1}) matches with time information fed back by the second reproduction apparatus (D_{T2}).

3. A controller as claimed in Claim 1 or 2 comprising:
a variable-speed lever (5) for varying the reproduction speed,
second position detecting means (23) for detecting the position of the variable-speed lever, and
reproduction-speed switching means (40) for switching said reproduction speed in accordance with detection results produced by the first-mentioned position detecting means (23) and the second position detecting means (25).

## Patentansprüche

1. Steuervorrichtung zur Steuerung einer Wiedergabevorrichtung, umfassend eine Wiedergabegeschwindigkeits-Auswahleinrichtung (22A, 22B, 22C) zur Auswahl eines Wertes für eine Wiedergabegeschwindigkeit,
gekennzeichnet durch
eine geschwindigkeitsverändemde Wahleinrichtung (24) zur Veränderung der Wiedergabegeschwindigkeit,
eine Positions-Detektiereinrichtung (25) zur Abgabe einer Drehpositionsinformation, welche eine Drehposition der geschwindigkeitsverändernden Wahleinrichtung (24) repräsentiert,
eine Wiedergabegeschwindigkeits-Schalteinrichtung (40) zur Einstellung der Wiedergabegeschwindigkeit in Übereinstimmung mit einem Auswahlbetrieb auf einen Wert, der durch Betätigen der Wiedergabegeschwindigkeits-Auswahleinrichtung (22A, 22B, 22C) bestimmt ist, oder auf einen Wert, der auf der Drehpositionsinformation basiert, welche von der Positions-Detektiereinrichtung (25) abgegeben ist,
und eine Initialisierungseinrichtung (26,46,48), die auf die Auswahl der geschwindigkeitsverändernden Wahleinrichtung hin betreibbar ist zur Initialisierung der Drehpositionsinformation, die von der Positions-Detektiereinrichtung (25) abgegeben ist, auf einen Wert entsprechend einer Wiedergabegeschwindigkeit vor der Auswahl der geschwindigkeitsverändernden Wahleinrichtung (24) und zur Abgabe der initialisierten Drehpositionsinformation an die Wiedergabegeschwindigkeits-Schalteinrichtung (40).

2. Steuervorrichtung nach Anspruch 1, wobei sie derart betreibbar ist, daß eine Wiedergabegeschwindigkeit einer ersten Wiedergabevorrichtung (2) und eine Wiedergabegeschwindigkeit einer zweiten Wiedergabevorrichtung (3) durch Abgabe eines Wiedergabegeschwindigkeits-Steuersignals (D_{COMD1}) an die erste Wiedergabevorrichtung (2) und eines Wiedergabegeschwindigkeits-Steuersignals (D_{COMD2}) an die zweite Wiedergabevorrichtung (3) gesteuert werden,
wobei die Steuervorrichtung eine Steuerbetriebsartumschaltung auf der Grundlage der Wiedergabegeschwindigkeits-Steuersignale (D_{COMB1}, D_{COMB2}) durchzuführen und für Wiedergabegeschwindigkeiten innerhalb eines bestimmten Bereichs die Wiedergabegeschwindigkeits-Steuersignale derart einzustellen gestattet, daß eine von der ersten Wiedergabevorrichtung (D_{T1}) rückgekoppelte Zeitinformation mit einer von der zweiten Wiedergabevorrichtung (D_{T2}) rückgekoppelten Zeitinformation übereinstimmt.

3. Steuervorrichtung nach Anspruch 1 oder 2, umfassend einen geschwindigkeitsverändernden Hebel (5) zur Veränderung der Wiedergabegeschwindigkeit, eine zweite Positions-Detektiereinrichtung (23) zur Ermittelung der Position des geschwindigkeitsverändernden Hebels
und eine Wiedergabegeschwindigkeits-Schalteinrichtung (40) zum Schalten der genannten Wiedergabegeschwindigkeit in Übereinstimmung mit Detektierergebnissen, die durch die ersterwähnte Positions-Detektiereinrichtung (25) und die zweite Positions-Detektiereinrichtung (23) erzeugt sind.

## Revendications

1. Une unité de commande pour commander un appareil de reproduction, comprenant :
des moyens de sélection de vitesse de reproduction (22A, 22B, 22C) pour sélectionner une valeur pour une vitesse de reproduction, caractérisée par
un bouton de vitesse variable (24) pour faire varier la vitesse de reproduction;
des moyens de détection de position (25) pour émettre une information de position angulaire représentant une position angulaire du bouton de vitesse variable (24);
des moyens de changement de vitesse de reproduction (40) pour fixer la vitesse de reproduction, conformément à une opération de sélection, à une valeur qui est déterminée par l'actionnement des moyens de sélection de vitesse de reproduction (22A, 22B, 22C), ou à une valeur qui est basée sur l'information de position angulaire qui est émise par les moyens de détection de position (25), et
des moyens d'initialisation (26, 46, 48) pouvant fonctionner dans le cas de la sélection du bouton de vitesse variable, pour initialiser l'information de position angulaire qui est émise par les moyens de détection de position (25), à une valeur correspondant à une vitesse de reproduction avant la sélection du bouton de vitesse variable (24), et pour émettre l'information de position angulaire initialisée vers les moyens de changement de vitesse de reproduction (40).

2. Une unité de commande selon la revendication 1, l'unité de commande pouvant être utilisée de façon à commander une vitesse de reproduction d'un premier appareil de reproduction (2) et une vitesse de reproduction d'un second appareil de reproduction (3), par l'émission d'un signal de commande de vitesse de reproduction (D_{COMD1}) vers le premier appareil de reproduction (2) et d'un signal de commande de vitesse de reproduction (D_{COMD2}) vers le second appareil de reproduction (3), l'unité de commande permettant d'effectuer un changement de mode basé sur les signaux de commande de vitesse de reproduction (D_{COMB1}, D_{COMB2}), et permettant d'ajuster les signaux de commande de vitesse de reproduction, pour des vitesses de reproduction comprises à l'intérieur d'une plage prédéterminée, de façon qu'une information de temps qui est renvoyée par le premier appareil de reproduction (D_{T1}) concorde avec une information de temps qui est renvoyée par le second appareil de reproduction (D_{T2}).

3. Une unité de commande selon la revendication 1 ou 2, comprenant :
un levier de vitesse variable (5) pour faire varier la vitesse de reproduction,
des seconds moyens de détection de position (23) pour détecter la position du levier de vitesse variable, et
des moyens de changement de vitesse de reproduction (40) pour changer la vitesse de reproduction conformément à des résultats de détection qui sont produits par les moyens de détection de position (23) mentionnés en premier, et par les seconds moyens de détection de position (25).
